# EUROPEAN PATENT APPLICATION

(11) **EP 2 383 164 A1**
(43) Date of publication of application: **02.11.2011**
(21) Application number: 09839719.3
(22) Date of filing: 28.12.2009
(51) Int. Cl.: B62D 1/04, B62D 5/04

(54) **STEERING APPARATUS FOR A VEHICLE**

(30) Priority: 04.02.2009 JP 2009024078
(71) Applicant: Honda Motor Co., Ltd., Minato-ku Tokyo 107-8556 (JP)
(72) Inventor: TADA Yoshinobu, Wako-shi Saitama 351-0193 (JP); MATSUMOTO Yoshiyuki, Wako-shi Saitama 351-0193 (JP); TAMURA Norifumi, Wako-shi Saitama 351-0193 (JP)
(74) Representative: Feller, Frank
(86) International application number: PCT/JP2009/071778
(87) International publication number: WO 2010/089945

(57) **Abstract**

A steering apparatus for a vehicle is provided with electric switches (20L,20R) on a steering wheel (12) that are to be operated by driver's fingers. The switches (20L,20R) send signals for an actuator (17) to steer the vehicle wheels (W) so that the driver can increase or decrease the steering angle by operating the switches without changing the position of wheel grip on the steering wheel (12). Each of the switches (20L,20R) is received in a recess (12b) provided on the steering rim portion (12a) such that the switches do not project on the steering wheel and the driver may not inadvertently operate the switches (20L,20R).

## Description

### TECHNICAL FIELD

The present invention relates to a steering apparatus for a vehicle that includes a steering wheel that is operated by a driver in order to turn a vehicle wheel, an operating member that is provided on the steering wheel and outputs an electrical signal in response to the driver's operation, and a steering actuator that turns the vehicle wheel according to the electrical signal outputted by the operating member.

### BACKGROUND ART

In general, since a steering wheel for a vehicle rotates by at least one rotation in each of left and right directions relative to the neutral position, in order to turn the vehicle wheel to a limit position it is necessary for a driver to change the hold on the steering wheel during the process of rotating the steering wheel, and this is a main factor in degrading operability.

An arrangement in which a steering wheel is supported so that it can freely rotate around a steering shaft, the steering wheel is supported so that it can freely swing back and forth around a vertical axis and, without changing the hold on the steering wheel, a steering actuator is driven based on an electrical signal outputted according to the rotation and swinging of the steering wheel so as to turn a vehicle wheel, is known from Patent Document 1 below.

Furthermore, an arrangement in which part of a steering wheel is formed from a grip that can be twisted relative to another part, and by twisting the grip while rotating the steering wheel a yaw moment due to a difference in braking force between left and right vehicle wheels is generated, this yaw moment assisting or suppressing cornering of the vehicle caused by turning of the vehicle wheels, is known from Patent Document 2 below.
Patent Document 1: Japanese Patent Application Laid-open No. 2000-52997
Patent Document 2: Japanese Patent Application Laid-open No. 2008-114831 1

### DISCLOSURE OF THE INVENTION

### PROBLEMS TO BE SOLVED BY THE INVENTION

In the arrangement described in Patent Document 1 above, there is a possibility that, due to tilting of the upper body of a driver when operating the steering wheel, lateral acceleration during cornering, shaking of the vehicle body caused by unevenness of the road surface, etc., the rotation and swinging of the steering wheel will be mixed against a driver's intention, and turning that is not expected by the driver will be carried out.

Furthermore, in the arrangement described in Patent Document 2 above, there is a possibility that movement of the arms when the driver rotates the steering wheel causes the grip to be twisted against a driver's intention, and the braking forces on left and right vehicle wheels change to thus generate a yaw moment, which is not expected by the driver.

The present invention has been accomplished in light of the above-mentioned circumstances, and it is an object thereof to increase and decrease the turning angle to match a driver's intention without changing the hold on the steering wheel.

### MEANS FOR SOLVING THE PROBLEMS

In order to attain the above object, according to a first aspect of the present invention, there is provided a steering apparatus for a vehicle comprising a steering wheel that is operated by a driver so as to turn a vehicle wheel, an operating member that is provided on the steering wheel and outputs an electrical signal in response to an operation by the driver, and a steering actuator that turns the vehicle wheel according to an electrical signal outputted by the operating member, wherein the operating member is housed in a recess formed on a surface of a rim portion of the steering wheel so as not to project from the surface.

Further, according to a second aspect of the present invention, in addition to the first aspect, the steering actuator is operated according to an electrical signal outputted by operation of the steering wheel.

Furthermore, according to a third aspect of the present invention, in addition to the first or second aspect, the operating member is operated by a driver's digit.

Switches 20L and 20R of an embodiment correspond to the operating member of the present invention.

### EFFECTS OF THE INVENTION

In accordance with the first aspect of the present invention, since the steering wheel is provided with the operating member that outputs an electrical signal in response to a driver's operation, and the vehicle wheel is turned by operating the steering actuator according to an electrical signal outputted by the operating member, the turning angle can be freely increased and decreased merely by operating the operating member without changing the hold on the steering wheel in a state in which the steering wheel is operated and the vehicle wheel is turned. Moreover, since the operating member is housed in a recess formed on the surface of a rim portion of the steering wheel without projecting from the surface thereof, it is possible to reliably prevent the operating member from being erroneously operated against a driver's intention during operation of the steering wheel.

Furthermore, in accordance with the second aspect of the present invention, since the steering actuator is operated according to an electrical signal outputted in response to operation of the steering wheel, it is possible to cut the number of components by making it possible to operate a common steering actuator by both the steering wheel and the operating member and to realize steer-by-wire.

Moreover, in accordance with the third aspect of the present invention, since the operating member is operated by a driver's digit, the operability of the operating member is further improved.

### BRIEF DESCRIPTION OF DRAWINGS

[FIG. 1] FIG. 1 is a diagram showing the overall arrangement of a steer-by-wire apparatus (first embodiment).
[FIG. 2] FIG. 2 is an enlarged sectional view along line 2-2 in FIG. 1 (first embodiment).
[FIG. 3] FIG. 3 is a front view of a steering wheel (second embodiment).
[FIG. 4] FIG. 4 is a front view of a steering wheel (third embodiment).

### EXPLANATION OF REFERENCE NUMERALS AND SYMBOLS

12 Steering wheel
12a Rim portion
12b Recess
17 Steering actuator
20L Switch (operating member)
20R Switch (operating member)
W Vehicle wheel

### BEST MODE FOR CARRYING OUT THE INVENTION

Modes for carrying out the present invention are explained below by reference to the attached drawings.

### FIRST EMBODIMENT

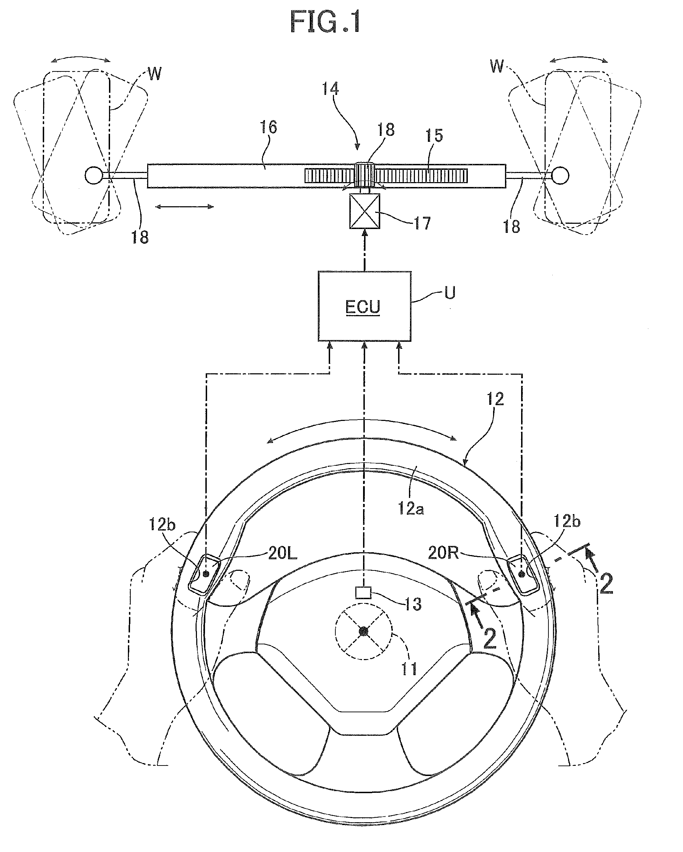

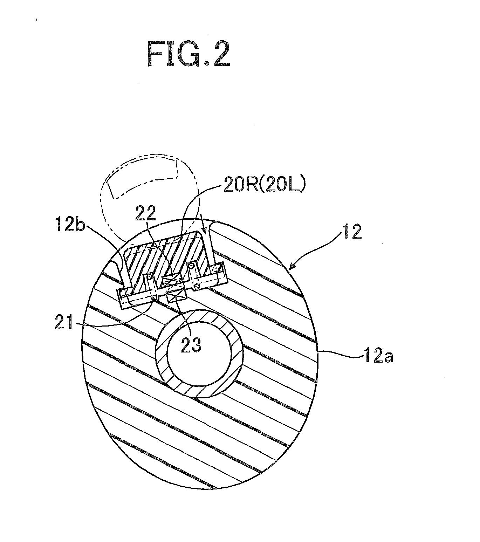

FIG. 1 and FIG. 2 show a first embodiment of the present invention.

As shown in FIG. 1, a steer-by-wire apparatus includes a steering wheel 12 that is rotated by a driver around a steering shaft 11, the rotational angle (steering angle) of the steering shaft 11 being detected by a steering angle sensor 13. The rotational angle of the steering wheel 12 is set in a range that can be operated without the driver changing the hold on the steering wheel 12, for example, 120° in each of left and right directions from a neutral position.

A rack-and-pinion type steering gear box 14 includes a rack bar 16 having a rack 15 5 formed thereon, and a pinion 18 that is rotated by a steering actuator 17, which is formed from an electric motor, meshes with the rack 15. Opposite ends of the rack bar 16 are connected to left and right vehicle wheels W and W via tie rods 19 and 19.

As is clear from FIG. 1 and FIG. 2, recesses 12b and 12b opening toward the driver side are formed at two, left and right, positions of an annular rim portion 12a of the steering wheel 12 that is gripped by the driver with both hands. Push-button type switches 20L and 20R are housed within the left and right recesses 12b and 12b. The switches 20L and 20R are placed at positions at which the driver can easily operate them by the thumbs when gripping the steering wheel 12. Top parts of the switches 20L and 20R are provided so that they do not project beyond the surface of the rim portion 12a of the steering wheel 12 from openings of the recesses 12b and 12b, that is, they are completely housed within the recesses 12b and 12b.

The switch 20R on the right side is urged by a return spring 21 in a direction in which it projects from the recess 12b, and a movable contact 22 provided on the switch 20R side and a fixed contact 23 provided on the steering wheel 12 rim portion 12a side face each other so that they can abut against each other. Therefore, when the driver pushes the switch 20R against the resilient force of the return spring 21 with a thumb, the movable contact 22 is made to abut against the fixed contact 23, thus closing the switch 20R. The switch 20L on the left side has the same structure as that of the switch 20R on the right side.

As shown in FIG. 1, an electronic control unit U, into which the signal outputted by the steering angle sensor 13 for detecting the steering angle of the steering wheel 12 and signals outputted by the left and right switches 20L and 20R are inputted, controls the operation of the steering actuator 17. When the steering actuator 17 is operated, the rack bar 16 is moved left or right via the pinion 18 and the rack 15, and the left and right vehicle wheels W and W are turned via the tie rods 19 and 19.

When the driver operates the steering wheel 12 to the left or the right from the neutral position, the steering actuator 17 operates according to the steering angle detected by the steering angle sensor 13, and a turning angle corresponding to the steering angle is generated in the left and right vehicle wheels W and W. When the steering wheel 12 is in a state in which it is rotated to a limit position in, for example, the left direction, if the driver pushes the switch 20L on the left side, the steering actuator 17 operates, and the left and right vehicle wheels W and W are turned further in the left direction. The amount of increase in the turning angle of the vehicle wheels W and W is proportional to the time during which the driver is pushing the switch 20L, and when the switch 20L is released, the turning angle returns to the state it was in before the switch 20L was pushed.

The operation when the switch 20L on the left side is operated is explained above, but the operation when the switch 20R on the right side is operated is substantially the same apart from left and right being reversed.

As described above, since the turning angle of the vehicle wheels W and W can be increased merely by pushing the switches 20L and 20R without the driver changing the hold on the steering wheel 12, the burden of a steering operation on the driver can be alleviated. Moreover, since the driver can push the switches 20L and 20R using a finger while gripping the steering wheel 12, the operability is further improved. Furthermore, since the switches 20L and 20R are housed in the recesses 12b and 12b of the steering wheel 12 and do not project from the surface of the steering wheel 12, it is possible to prevent the switches 20L and 20R from being erroneously operated against a driver's intention.

In addition, the switches 20L and 20R can be operated not only in a case in which the steering wheel 12 is at a rotational limit position but also in a case of any rotational position, and this is also effective in a case in which a fine degree of turning is carried out when traveling straight ahead.

### SECOND EMBODIMENT

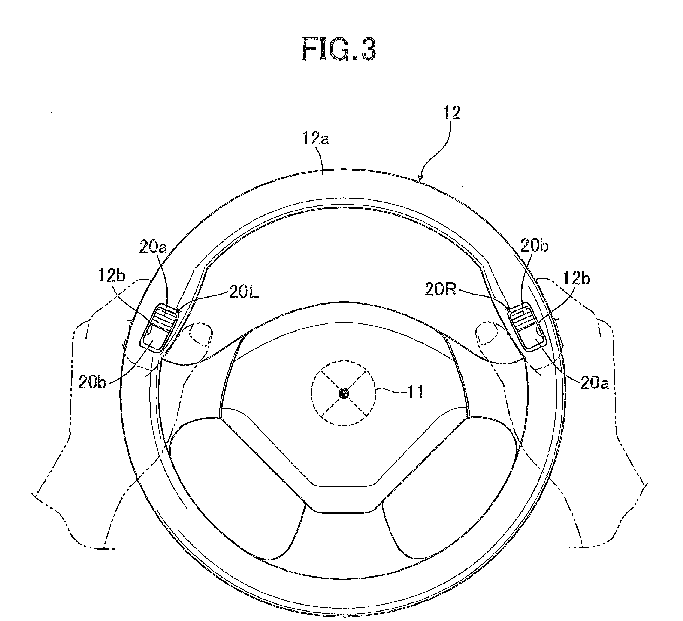

A second embodiment of the present invention is now explained by reference to FIG. 3.

Switches 20L and 20R of the second embodiment can swing in opposite directions relative to a neutral position, are held at the position to which they are swung in response to an operation by the driver, and return to the neutral position in response to an operation by the driver.

For example, the switch 20L on the left side includes a right side portion 20a and a left side portion 20b; when the right side portion 20a is pushed so as to swing the switch 20L, a steering actuator 17 is operated so as to increase the turning angle of vehicle wheels W and W to the right side, and when the left side portion 20b is pushed so as to swing the switch 20L in the reverse direction, the steering actuator 17 is operated so as to increase the turning angle of the vehicle wheels W and W to the left side. While the switch 20L is at a swung position, the turning angle continues to change, and when the switch 20L is returned to the neutral position, the turning angle returns toward the original position.

The switches 20L and 20R of the present embodiment are placed so as not to project outward from recesses 12b and 12b of a rim portion 12a of a steering wheel 12, and the same operational effects as those of the first embodiment can be achieved.

### THIRD EMBODIMENT

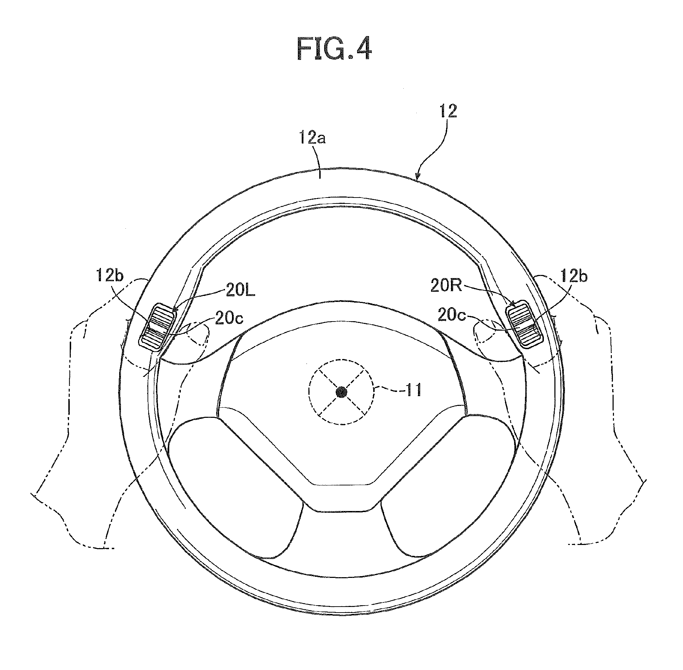

A third embodiment of the present invention is now explained by reference to FIG. 4.

Switches 20L and 20R of the third embodiment can swing in opposite directions relative to a neutral position, and after they swing in response to an operation by the driver, they return to the neutral position automatically when the driver releases the force.

For example, the switch 20L on the left side includes an operation section 20c in the middle, and when the operation section 20c is pushed so as to swing the switch 20L to the right side, a steering actuator 17 is operated only during swinging so as to increase the turning angle of vehicle wheels W and W to the right side, and when the operation section 20c is pushed so as to swing the switch 20L to the left side, the steering actuator 17 is operated so as to increase the turning angle of the vehicle wheels W and W to the left side. When the finger is released from the switch 20L, it automatically returns to the neutral position, and the turning angle of the vehicle wheels W and W also returns to the state it was in prior to the operation.

The switches 20L and 20R of the present embodiment are also placed so as not to project outward from recesses 12b and 12b of a rim portion 12a of a steering wheel 12, and the same operational effects as those of the first embodiment can be achieved.

Embodiments of the present invention are explained above, but the present invention may be modified in a variety of ways as long as the modifications do not depart from the spirit and scope thereof.

For example, in the embodiments a steer-by-wire apparatus is explained, but the present invention may be applied to a normal steering apparatus in which a steering wheel 12 and a steering gear box 14 are mechanically linked. In this case, a turning angle produced by a steering actuator 17 operated by operation of switches 20L and 20R is added to a turning angle due to operation of the steering wheel 12.

Furthermore, switches 20L and 20R may be provided on a front face side (side opposite to driver) of a steering wheel 12, and they may be operated by an index finger or a middle finger.

## Claims

1. A steering apparatus for a vehicle comprising a steering wheel (12) that is operated by a driver so as to turn a vehicle wheel (W), an operating member (20L, 20R) that is provided on the steering wheel (12) and outputs an electrical signal in response to an operation by the driver, and a steering actuator (17) that turns the vehicle wheel (W) according to an electrical signal outputted by the operating member (20L, 20R), wherein
the operating member (20L, 20R) is housed in a recess (12b) formed on a surface of a rim portion (12a) of the steering wheel (12) so as not to project from the surface.

2. The steering apparatus for a vehicle according to Claim 1, wherein the steering actuator (17) is operated according to an electrical signal outputted by operation of the steering wheel (12).

3. The steering apparatus for a vehicle according to Claim 1 or Claim 2, wherein the operating member (20L, 20R) is operated by a driver's digit.
